# EUROPEAN PATENT SPECIFICATION

(11) **EP 4 584 949 B1**
(45) Date of publication and mention of the grant of the patent: **08.04.2026**
(21) Application number: 23776550.8
(22) Date of filing: 01.09.2023
(51) Int. Cl.: H04N 9/31, G03B 21/20, G02B 27/46, G02B 27/42, G09G 3/00, G03B 21/00, G02B 26/08, H04N 5/74, G09G 3/34

(54) **PIXEL SHIFTING METHODS IN PROJECTION SYSTEMS**
PIXELVERSCHIEBUNGSVERFAHREN IN PROJEKTIONSSYSTEMEN
PROCÉDÉS DE DÉCALAGE DE PIXELS DANS DES SYSTÈMES DE PROJECTION

(30) Priority: 07.09.2022 US 202263404371 P; 31.12.2022 EP 22217440
(43) Date of publication of application: 16.07.2025
(73) Proprietor: Dolby Laboratories Licensing Corporation, San Francisco, CA 94103 (US)
(72) Inventor: ORLICK, Christopher John, San Francisco, California 94103 (US); MILLER, Jon Scott, San Francisco, California 94103 (US)
(74) Representative: Dolby International AB Patent Group Europe
(86) International application number: PCT/US2023/073288
(87) International publication number: WO 2024/054778

(56) References cited:
- WO-A1-2022/165073
- US-A1- 2007 076 171
- US-A1- 2007 268 459
- US-A1- 2007 279 537
- US-B1- 6 219 017

## Description

### CROSS-REFERENCE TO RELATED APPLICATIONS

This application claims priority of U.S. Provisional Patent Application No. 63/404,371, filed September 7, 2022, and European Patent Application No. 22217440.1 filed December 31, 2022.

### BACKGROUND

### 1. Field of the Disclosure

This application relates generally to projection systems and projection methods.

### 2. Description of Related Art

Digital projection systems typically utilize a light source and an optical system to project an image onto a surface or screen. The optical system may include components such as mirrors, lenses, waveguides, optical fibers, beam splitters, diffusers, spatial light modulators (SLMs), and the like. The contrast of a projector indicates the brightest output of the projector relative to the darkest output of the projector. Contrast ratio is a quantifiable measure of contrast, defined as a ratio of the luminance of the projector's brightest output to the luminance of the projector's darkest output. This definition of contrast ratio is also referred to as "native" contrast ratio.

Some projection systems are based on SLMs that implement a spatial amplitude modulation, such as a digital micromirror device (DMD) chip. A DMD may utilize a two-dimensional array of mirrors which can be controlled to create an image. If one desires to project an image with a higher resolution than that of the DMD (*e.g.,* an image having a greater number of pixels than the number of mirrors in the DMD), pixel-shifting techniques may be used. In one comparative example of a pixel-shifting technique, sometimes called "wobulation," the system may be controlled to effectively shift the modulator, or a device situated optically after the modulator, by fractional pixels in a set pattern to create the appearance of displaying additional pixels.

US2007268459A1 discloses a display system including a mechanism to provide for simultaneous pixelated color with a spatial light modulator. Also included is a mechanism to project the simultaneous pixelated color to create a color field display on a viewing surface. A further mechanism moves the color field display relative to viewing surface to provide at least one of color and resolution increasing wobulation.

US6219017B1 discloses an image display apparatus for displaying high resolution images by shifting pixels based on wobbling operation by placing a TN cell consisting of a polarization changing liquid crystal plate and a birefringence plate on the front side of an LCD to be driven by video signals, the image display apparatus being provided with a correction circuit to which video signal of the preceding filed stored to a field memory, video signal of the current field and a field discriminant signal are inputted, the LCD being driven by correction video signals generated at the correction circuit so as to display a high resolution image mitigating degradation in image quality due to response delays of the LCD and TN cell.

US2007279537A1 relates to a system and method for optical calibration of a picture modulator. More specifically, there is provided a video unit comprising a modulator configured to modulate a projection lens assembly between a first position and a second position, a photodiode assembly configured to produce a first voltage corresponding to a first pixel pattern generated when the projection lens assembly is in the first position and to produce a second voltage corresponding to a second pixel pattern when the projection lens assembly is the second position, and a video control system configured to adjust the location of the second position based on the first and second voltages.

US2007076171A1 describes a wobulator position sensing system including a wobulator plate, having a wobulator window, and a position detector, associated with the wobulator plate. The wobulator is disposed along an image projection path, and configured to selectively tilt so as to shift the projection path. The position detector is configured to sense a magnitude of tilting of the wobulator plate, and to produce a feedback signal useable to control tilting of the wobulator plate.

### BRIEF SUMMARY OF THE DISCLOSURE

The present invention is defined by the independent claims. The dependent claims define advantageous embodiments. Further aspects of the present invention will become apparent from the following description with reference to the attached drawings. Wobulation devices are used to implement the pixel-shifting technique. Wobulation devices, or wobulators, are devices that move pixels rapidly between a set of fixed positions to create a high resolution image. For example, a wobulator may move pixels in a square pattern to quadruple the displayed resolution, creating a 2x2 set of pixels for each physical DMD pixel.

Transitions of the wobulator between each position may blur the displayed pixels, lowering the potential resolution and creating artifacts within the image projected by the DMD. Specifically, the "effective" point spread function (PSF) that is viewed is the integration of the light at all time instants for a given pixel. Accordingly, at least three artifacts from wobulation movement may affect the image projected by the DMD: increased pixel size, distorted pixel shape, and movement of the pixel center-of-mass. The more time that is spent in the transition between positions, the larger the "effective" pixel (*e.g.,* the projected pixels, the pixels observed by a viewer of the projected image) provided by the wobulator. Additionally, the more time and distance spent away from the "ideal" pixel position results in deformation from the "ideal" pixel shape (e.g., the pixel shape with no motion).

Further, the location of the center-of-mass of each projected pixel is affected by the motion path of the wobulator. This movement of the center-of-mass of each pixel not only impacts the resolution of the projected image, but results in a dependency between the location of the image pixel patterns to the group of wobulator pixels. For example, a one pixel checkerboard pattern (e.g., a repeating 2x2 pixel pattern) may have a different projected resolution depending on how the checkerboard pattern aligns with the group of wobulator sub-pixels.

Embodiments described herein provide mitigation techniques to lessen such artifacts. One mitigation technique provides for controlling the DMD to an "off" position, essentially stopping the projection of light to the wobulator during movement of the wobulator from one position to another. Another mitigation technique provides for expanding the path of motion of the wobulator such that the wobulator moves between positions by a distance greater than a length of half a pixel when increasing the resolution in a particular direction. Such mitigation techniques reduce artifacts found in an image output from the wobulator.

In one exemplary aspect of the present disclosure, there is provided a projection system with pixel shifting comprising a light source configured to emit light and a spatial light modulator configured to receive the light and generate a modulated light. The spatial light modulator includes a plurality of micromirrors. The projection system includes a wobulation device configured to shift the modulated light by fractional pixels. The projection system includes a controller configured to, for each of a plurality of subperiods, control the light source to emit the light onto the spatial light modulator, and between each of the plurality of subperiods and with the wobulation device, shift the modulated light by a partial pixel distance greater than a half-pixel distance.

In another exemplary aspect of the present disclosure, there is provided a method of calibrating pixel shifting in a projection system, the method comprising emitting, with a light source, a light, receiving, with a spatial light modulator, the light, and modulating, with the spatial light modulator, the light to generate a modulated image, wherein the modulated image comprises a plurality of pixels. The method includes shifting, between each of a plurality of subperiods, the modulated light of each pixel of the modulated image by a partial pixel distance to generate a wobulated image, determining an amount of wobulation artifacts in the wobulated image, and adjusting the partial pixel distance based on the determined amount of artifacts.

In another exemplary aspect of the present disclosure, there is provided a projection method for pixel shifting comprising controlling, for each of a plurality of subperiods, a light source to emit a light onto a plurality of micromirrors on a spatial light modulator, receiving, with the plurality of micromirrors and for each of the plurality of subperiods, the light to generate a modulated light, and shifting, between each of the plurality of subperiods, the modulated light by a partial pixel distance greater than a half-pixel distance.

In this manner, various aspects of the present disclosure provide for the display of images having a high dynamic range, high contrast ratio, and high resolution, and effect improvements in at least the technical fields of image projection, holography, signal processing, and the like.

### DESCRIPTION OF THE DRAWINGS

These and other more detailed and specific features of various embodiments are more fully disclosed in the following description, reference being had to the accompanying drawings, in which:
FIGS. 1A-1B illustrate views of an exemplary spatial light modulator according to various aspects of the present disclosure;
FIG. 2 illustrates an exemplary pixel-shift operation according to various aspects of the present disclosure;
FIG. 3 illustrates an exemplary wobulation path of a wobulation device according to various aspects of the present disclosure;
FIG. 4 illustrates an exemplary checkerboard pattern according to various aspects of the present disclosure;
FIGS. 5A-5B illustrate exemplary wobulation responses to the checkerboard pattern of FIG. 4 with small points of light, according to various aspects of the present disclosure;
FIG. 6 illustrates another exemplary checkerboard pattern according to various aspects of the present disclosure;
FIG. 7 illustrates exemplary wobulation responses to the checkboard pattern of FIG. 6 with small points of light, according to various aspects of the present disclosure;
FIG. 8 illustrates exemplary wobulation responses to the checkerboard pattern of FIG. 6 with real pixel point spread functions, according to various aspects of the present disclosure;
FIG. 9 illustrates a wobulation response to an exemplary pattern when the wobulator has instantaneous transition times, according to various aspects of the present disclosure;
FIG. 10 illustrates a wobulation response to the exemplary pattern of FIG. 9 when the wobulator has non-zero transition times, according to various aspects of the present disclosure;
FIG. 11 illustrates a wobulation response to an exemplary pattern of single-pixel-heigh horizontal lines when the wobulator has instantaneous transition times, according to various aspects of the present disclosure;
FIG. 12 illustrates a wobulation response to an exemplary pattern of single-pixel-heigh horizontal lines when the wobulator has non-zero transition times, according to various aspects of the present disclosure;
FIGS. 13 and 14 illustrate a wobulation response to an exemplary pattern when the wobulator has instantaneous transition times, according to various aspects of the present disclosure;
FIGS. 15 and 16 illustrate a wobulation response to an exemplary pattern when the wobulator has non-zero transition times, according to various aspects of the present disclosure;
FIG. 17 illustrates a superposition of the wobulation responses of FIGS. 13 and 14;
FIG. 18 illustrates a superposition of the wobulation responses of FIGS. 15 and 16
FIG. 19 illustrates an exemplary wobulation path implementing a blanking mitigation method, according to various aspects of the present disclosure;
FIG. 20A illustrates an exemplary wobulation path along an x-axis, according to various aspects of the present disclosure;
FIG. 20B illustrates an exemplary wobulation path along a y-axis, according to various aspects of the present disclosure;
FIG. 21 illustrates a wobulation response to an exemplary checkerboard pattern when the wobulator is implementing a blanking mitigation method, according to various aspects of the present disclosure;
FIG. 22 illustrates a wobulation response to an exemplary checkerboard pattern when the wobulator is not implementing a mitigation method, according to various aspects of the present disclosure;
FIG. 23 illustrates an exemplary process flow of an exemplary pixel-shift method including blanking, according to various aspects of the present disclosure;
FIG. 24 illustrates an exemplary expanded wobulation path, according to various aspects of the present disclosure;
FIG. 25 illustrates a wobulation response to an exemplary checkerboard pattern when the wobulator is configured with a non-expanded wobulation path, according to various aspects of the present disclosure;
FIG. 26 illustrates a wobulation response to an exemplary checkerboard pattern when the wobulator is configured with an expanded wobulation path, according to various aspects of the present disclosure;
FIG. 27 illustrates an exemplary process flow of calibrating a wobulation path, corresponding to the claimed invention.
FIG. 28 illustrates a block diagram of an exemplary projector display system, according to various aspects of the present disclosure;
FIG. 29 illustrates an optical configuration of an exemplary projector system, according to various aspects of the present disclosure; and
FIG. 30 illustrates an exemplary projection lens according to various aspects of the present disclosure.

### DETAILED DESCRIPTION

This disclosure and aspects thereof can be embodied in various forms, including hardware, devices, or circuits controlled by computer-implemented methods, computer program products, computer systems and networks, user interfaces, and application programming interfaces; as well as hardware-implemented methods, signal processing circuits, memory arrays, application specific integrated circuits (ASICs), field programmable gate arrays (FPGAs), and the like. The foregoing summary is intended solely to give a general idea of various aspects of the present disclosure.

In the following description, numerous details are set forth, such as optical device configurations, timings, operations, and the like, in order to provide an understanding of one or more aspects of the present disclosure.

Moreover, while the present disclosure focuses mainly on examples in which the various circuits are used in digital projection systems, it will be understood that this is merely one example of an implementation. It will further be understood that the disclosed systems and methods can be used in any device in which there is a need to project light; for example, cinema, consumer and other commercial projection systems, heads-up displays, virtual reality displays, and the like.

### Pixel Shifting

The optics of a projection system utilizing a spatial light modulator (SLM) may be broadly categorized into two parts: the optics located on the illumination side *(i.e.,* optically upstream of the SLM) and the optics located on the projection side (*i.e.,* optically downstream of the SLM). The SLM itself includes a plurality of modulating elements arranged in, for example, a two-dimensional array. Individual modulating elements receive light from the illumination optics and convey light to the projection optics. In some examples, the SLM may be implemented as a digital micromirror device (DMD) chip; this will be discussed in more detail below. Generally, however, a DMD includes a two-dimensional array of reflective elements (micromirrors or simply "mirrors") which selectively reflect light towards the projection optics or discard light based on the position of the individual reflective elements.

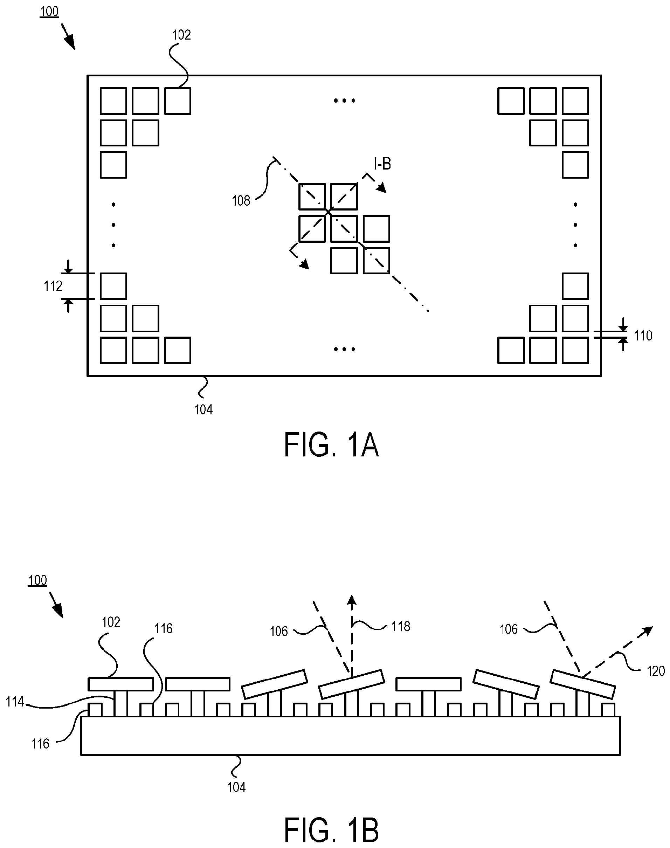

FIGS. 1A-1B illustrate various views of an exemplary DMD 100 according to various aspects of the present disclosure. In particular, FIG. 1A illustrates a plan view of the DMD 100 and FIG. 1B illustrates a partial cross-sectional view of the DMD 100 taken along line I-B illustrated in FIG. 1A. The DMD 100 includes a plurality of square micromirrors 102 arranged in a two-dimensional rectangular array on a substrate 104. In some examples, the DMD 100 may be a digital light processor (DLP) device. Each micromirror 102 may correspond to one pixel of the eventual projection image, and may be configured to tilt about a rotation axis 108, shown for one particular subset of the micromirrors 102, by electrostatic or other actuation. The individual micromirrors 102 have a width 112 and are arranged with gaps of width 110 therebetween. The micromirrors 102 may be formed of or coated with any highly reflective material, such as aluminum or silver, to thereby specularly reflect light. The gaps between the micromirrors 102 may be absorptive, such that input light which enters a gap is absorbed by the substrate 104.

While FIG. 1A expressly shows only some representative micromirrors 102, in practice the DMD 100 may include many more individual micromirrors. The resolution of the DMD 100 refers to the number of micromirrors in the horizontal and vertical directions. In some examples, the resolution may be 2K (2048×1080), 4K (4096×2160), 1080p (1920×1080), consumer 4K (3840×2160), and the like. Moreover, in some examples the micromirrors 102 may be rectangular and arranged in the rectangular array; hexagonal and arranged in a hexagonal array, and the like. Moreover, while FIG. 1A illustrates the rotation axis 108 extending in an oblique direction, in some implementations the rotation axis 108 may extend vertically or horizontally.

As can be seen in FIG. 1B, each micromirror 102 may be connected to the substrate 104 by a yoke 114, which is rotatably connected to the micromirror 102. The substrate 104 includes a plurality of electrodes 116. While only two electrodes 116 per micromirror 102 are visible in the cross-sectional view of FIG. 1B, each micromirror 102 may in practice include additional electrodes. While not particularly illustrated in FIG. 1B, the DMD 100 may further include spacer layers, support layers, hinge components to control the height or orientation of the micromirror 102, and the like. The substrate 104 may include electronic circuitry associated with the DMD 100, such as CMOS transistors, memory elements, and the like.

Depending on the particular operation and control of the electrodes 116, the individual micromirrors 102 may be switched between an "on" position, an "off" position, and an unactuated or neutral position. If a micromirror 102 is in the on position, it is actuated to an angle of, *e.g.,* -12° (that is, rotated counterclockwise by 12° relative to the neutral position) to specularly reflect input light 106 into on-state light 118. If a micromirror 102 is in the off position, it is actuated to an angle of, *e.g.,* +12° (that is, rotated clockwise by 12° relative to the neutral position) to specularly reflect the input light 106 into off-state light 120. The off-state light 120 may be directed toward a light dump that absorbs the off-state light 120. In some instances, a micromirror 102 may be unactuated and lie parallel to the substrate 104. The particular angles illustrated in FIGS. 1A-1B and described here are merely exemplary and not limiting. In some implementations, the on- and off-position angles may be between ±12 and ±13 degrees (inclusive), respectively.

In some implementations, the resolution of the DMD 100 may be lower than the desired resolution of the projected image. For example, one may desire to project an image having a 4K resolution, but DMDs having a 4K resolution may have limited or no commercial availability, prohibitive costs, and so on. In such implementations, it may be possible to control the relatively-low-resolution DMD 100 to effectively display additional pixels in the projected image. For example, a 2K mirror array may be controlled to display a 4K projected image, or a 1080p mirror array may be controlled to display a consumer 4K projected image. Pixel-shift techniques may be used to affect this control.

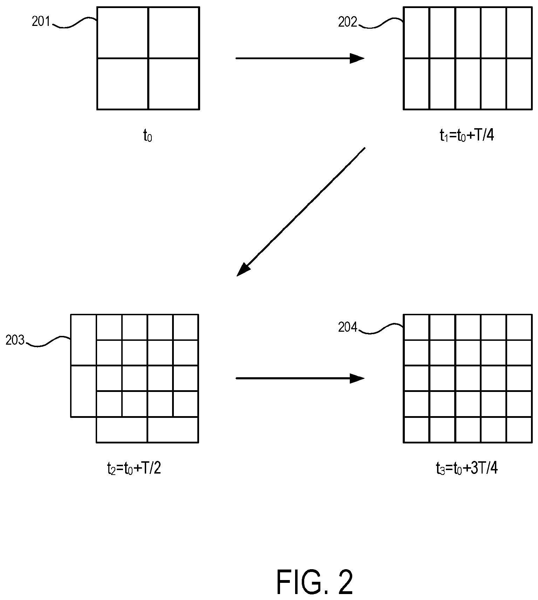

One exemplary pixel-shift technique (wobulation) uses some method *(e.g.,* an optical method) to effectively shift the DMD 100 by fractional pixels in a set pattern to display additional pixels. One example of such a pixel-shift technique is illustrated in FIG. 2. In the pixel-shift technique of FIG. 2, a frame display period T (generally one divided by the projector frame rate) is divided into four sub-periods each having a duration of T/4. At a time t₀ corresponding to the start of the first sub-period and thus the start of the frame display period T, an image is projected onto the screen. In FIG. 2, only a 2×2 subset of the pixels in the first resulting image 201 are shown; however, the first resulting image 201 in practice has a resolution corresponding to the relatively-lower resolution of the DMD 100. At a time t₁ corresponding to the start of the second sub-period, the image is shifted a half-pixel to the right, thus generating the second resulting image 202 on the screen. At a time t₂ corresponding to the start of the third sub-period, the image is shifted a half-pixel down, thus generating the third resulting image 203 on the screen. At a time t₃ corresponding to the start of the fourth sub-period, the image is shifted a half-pixel left, thus generating the fourth resulting image 204 on the screen. At the end of the frame display period T, the image may be shifted a half-pixel up, thus corresponding to the original position to begin display of the next frame. As can be seen from FIG. 2, each shift increases the effective display resolution (e.g., the resolution observed by a viewer of the image). The direction of shifting is not limited to the column and row directions of the pixel array *(i.e.,* up, down, left, and right), but may instead be in an oblique direction (e.g., diagonal). Moreover, while FIG. 2 shows a pixel-shifting technique which shifts the image in two dimensions, in certain implementations pixel-shifting may only occur in one dimension in a back-and-forth manner.

In some instances, a wobulation device performs the pixel-shifting on the output of the DMD 100, allowing the superimposed outputs of the DMD 100 to be viewed as a higher resolution output. The wobulation device is situated optically following the DMD 100, such that an output of the DMD 100 is received as an input of the wobulation device. The wobulation device may shift in a single direction (e.g., doubling the vertical resolution only or doubling the horizontal resolution only), or along multiple axes, such as a 2x2 position setup that doubles the resolution along both axes and effectively quadrupling the number of output pixels.

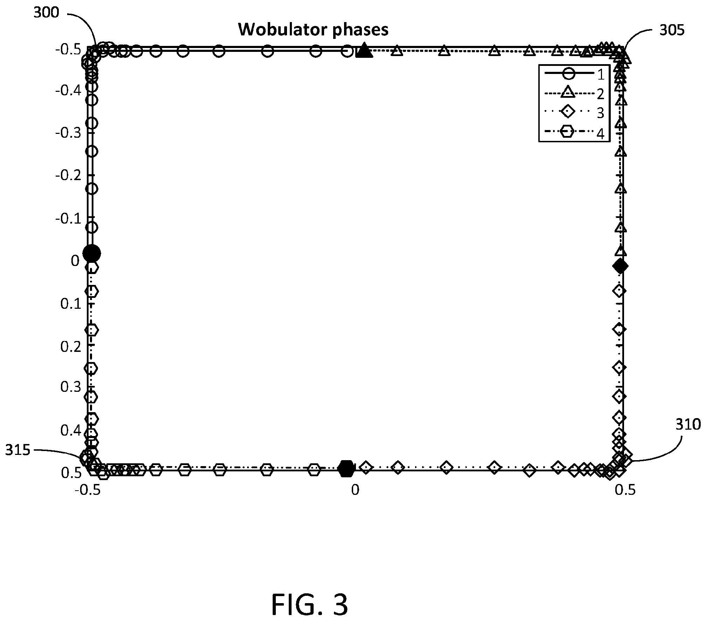

FIG. 3 provides a graph illustrating movement of a wobulation device between four positions, according to one example. In FIG. 3, the wobulator shifts between a first position 300, a second position 305, a third position 310, and a fourth position 315. For example, at a time t₀ corresponding to the start of the first sub-period and thus the start of the frame display period T, the wobulation device is located at the first position 300. At a time t₁ corresponding to the start of the second sub-period, the wobulator shifts to the right, from the first position 300 to the second position 305. At a time t₂ corresponding to the start of the third sub-period, the wobulator shifts downward, from the second position 305 to the third position 310. At a time t₃ corresponding to the start of the fourth sub-period, the wobulator shifts to the left, from the third position 310 to the fourth position 315. At the end of the frame display period T, the wobulator shifts upward, from the fourth position 315 to the first position 300. Each "point" in the graph represents a location of the wobulator over the display period T. As seen in FIG. 3, as the wobulator transitions between each position, a small amount of light may be "spread" over the travel path, as described below in more detail.

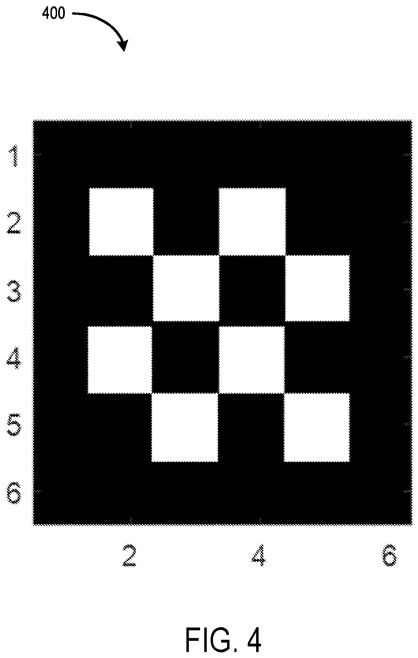

FIG. 4 provides an example wobulated output in response to an example checkboard pattern 400. The checkerboard pattern 400 includes four "checks", where each check is a basic 2x2 checkerboard pattern. Each "check" in the checkerboard pattern consists of 'on' pixels in the upper left and lower right corners, and 'off' pixels in the upper right and lower left corners. This pattern results in two pixels (along a diagonal) being active within each "check."

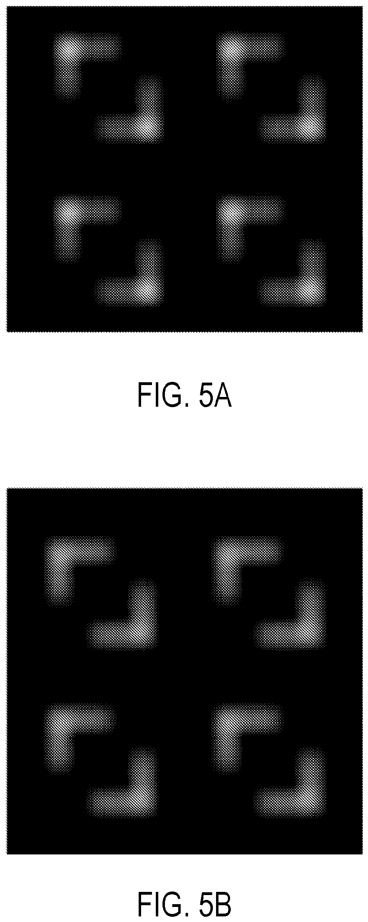

FIGS. 5A-5B provide example wobulation responses to the input checkboard pattern 300. In the example wobulation responses of FIGS. 5A-5B, as well as other example responses provided herein, a point-source pixel is analyzed rather than a pixel having a typical point spread function (PSF) that reflects off each micromirror 202 in the DMD 100. A typical pixel PSF covers an area at least as large as the pixel itself (e.g., as large as each micromirror 202). FIGS. 5A-5B provide eight pixels for every wobulated output pixel.

In FIG. 5A, the wobulation remains near the corner of each square for a relatively large amount of the entire sub-pixel cycle. The brightness of the illustrated pixel is relative to the transition time between each position (e.g., between each corner). In FIG. 5B, for comparison, the wobulation path is the same, but more time is spent in transition than compared to FIG. 5A. Accordingly, in FIG. 5B, more light is found along the path outside the corner positions, and the corners are less bright than those found in FIG. 5A.

### Pixel Shifting Artifacts

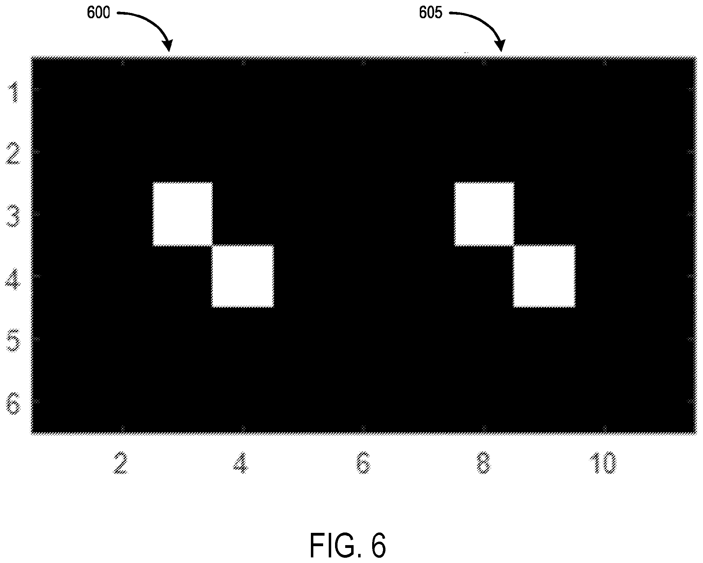

To illustrate example artifacts on effective (or projected) pixels, a reduced test pattern of two separated checkerboards is used, shown in FIG. 6. In FIG. 6, the leftmost checkerboard 600 is aligned and completely contained in a 2x2 wobulator subpixel grid. Specifically, each of the four pixels within the leftmost checkerboard 600 are created by the same wobulator shifting between four different positions. The rightmost checkerboard 605, however, spans two separate 2x2 subpixel grids. The two left pixels within the rightmost checkerboard 605 are created by wobulating (e.g., shifting with a wobulator) a first pixel, and the two right pixels within the rightmost checkerboard 605 are created by wobulating a second pixel.

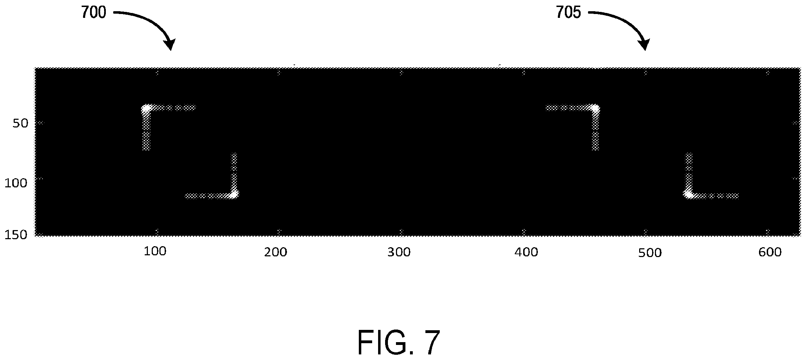

FIG. 7 illustrates example wobulation responses to the leftmost checkerboard 600 and the rightmost checkerboard 605 of FIG. 6 using an artificially small pixel for ease of visualization. Specifically, a leftmost wobulation response 700 corresponds to the leftmost checkboard 600, and a rightmost wobulation response 705 corresponds to the rightmost checkerboard 605. The effective pixel viewed in each wobulation response is the integration of light over the entire path of the wobulation device. As seen in FIG. 7, transition time affects the leftmost wobulation response 700 and the rightmost wobulation response 705 differently. For the leftmost wobulation response 700, as the checkboard pattern lies within a single 2x2 wobulation grid, the effect on the effective pattern moves each of the pixels close together and towards the center of the 2x2 wobulator grid. For the rightmost wobulation response 705, as the checkerboard pattern lies across two separate wobulator grids, the effective pattern moves each of the pixels away from each other with regard to the x-axis (while still moving toward the center of the 2x2 wobulator grid).

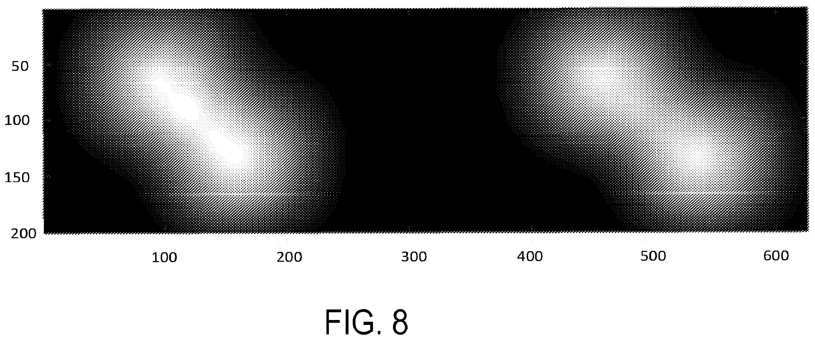

FIG. 8 illustrates the same wobulation responses with actual-sized pixel PSFs. In FIG. 8, the light has a different shape in response to the two identical checkerboard input patterns. Specifically, the checks on the right are further apart with a lower valley between the pixels compared to the checks on the left. Accordingly, wobulation artifacts are dependent on both the phasing of an input pattern and dependent on the wobulation grid itself.

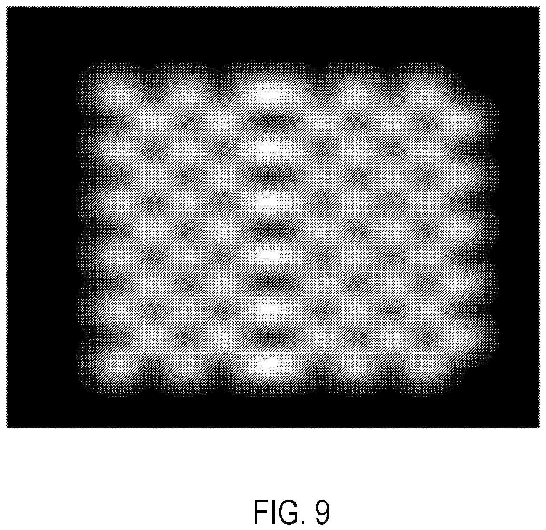

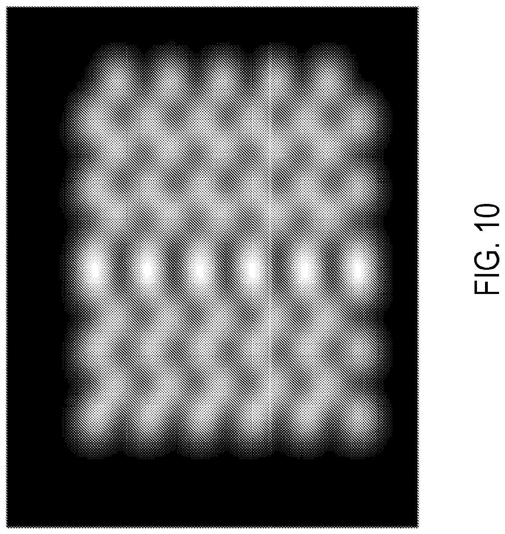

The artifacts present in the wobulation output can be further viewed within recurring patterns. FIG. 9, for example, illustrates a wobulation response to an exemplary pattern when the wobulator has ideal wobulation motion. A wobulator featuring ideal wobulation motion, as referred to herein, may be a wobulator having instantaneous transition times. FIG. 10, for comparison, illustrates a wobulation response to the exemplary pattern of FIG. 9 when the wobulator has non-ideal wobulation motion, or non-zero transition times. In FIG. 10, the left and right sides of the pattern show a different artifact orientation due to the phasing of the checkerboard relative to a 2x2 wobulator pixel cluster. In FIG. 9, the checkerboard pattern is clearly visible. However, in FIG. 10, there is a clear pattern of artifacts due to non-ideal wobulator motion impacting the size, shape, and location of the effective output pixels.

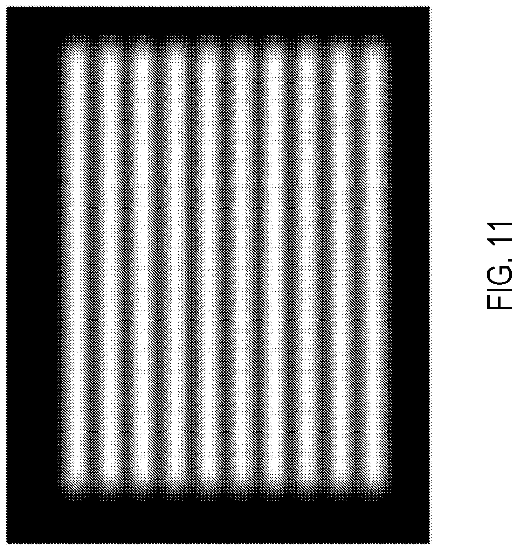

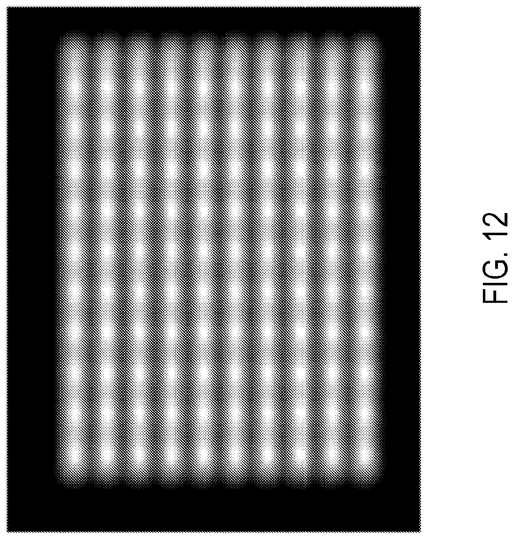

Another example pattern affected by non-ideal wobulator motion is that of single-pixel tall horizontal lines. FIG. 11 illustrates an ideal wobulator response to horizontal lines. FIG. 12, for comparison, illustrates a non-ideal wobulator response to the horizontal lines. As seen in FIG. 12, wobulator motion results in horizontal modulation of the lines compared to the ideal output of straight lines.

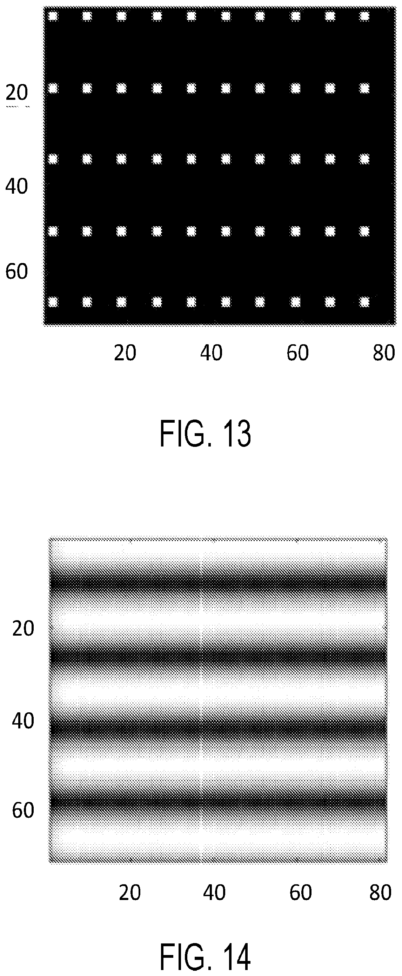

The modulation of FIG. 12 can be further examined by observing small points of light, rather than the full PSF pixels of FIGS. 11 and 12. FIG. 13 illustrates the single-pixel tall horizontal lines with small points of light for an ideal wobulator (i.e., a wobulator having no transition time). FIG. 14 illustrates the wobulated output with realistic PSFs corresponding to the horizontal lines of FIG. 13.

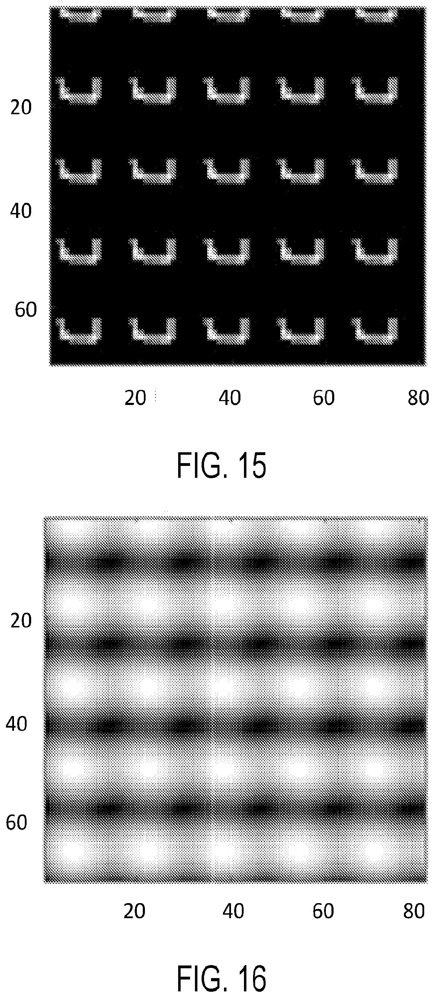

However, once a realistic wobulator having a non-zero transition time between positions is used, modulation appears in the output. FIG. 15 illustrates the single-pixel tall horizontal lines with small points of light for a realistic wobulator having non-zero transition time. FIG. 16 illustrates the wobulated output with realistic PSFs corresponding to the horizontal lines of FIG. 15.

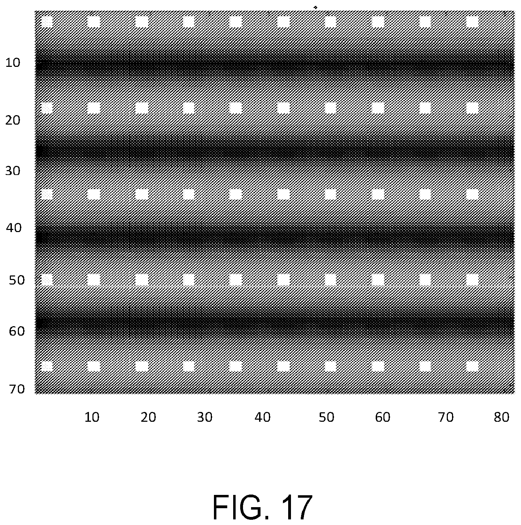

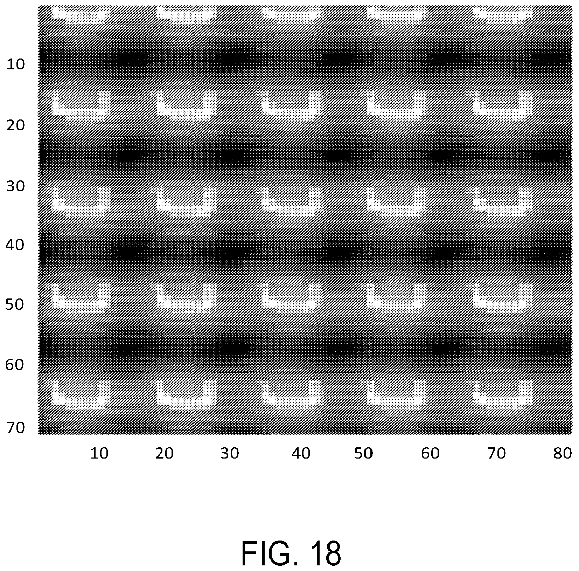

Superpositions of the wobulation responses further illustrate the artifacts created during wobulator motion. FIG. 17, for example, illustrates a superposition of the wobulation responses of FIG. 13 and 14 when the wobulator has instantaneous transition times. FIG. 18, for comparison, shows the superposition of the wobulation response of FIGS. 15 and 16 when the wobulator has non-instantaneous transition times. The superposition of the FIG. 18 shows the "bumps" in the lines created by the realistic wobulator motion.

### Mitigation Methods

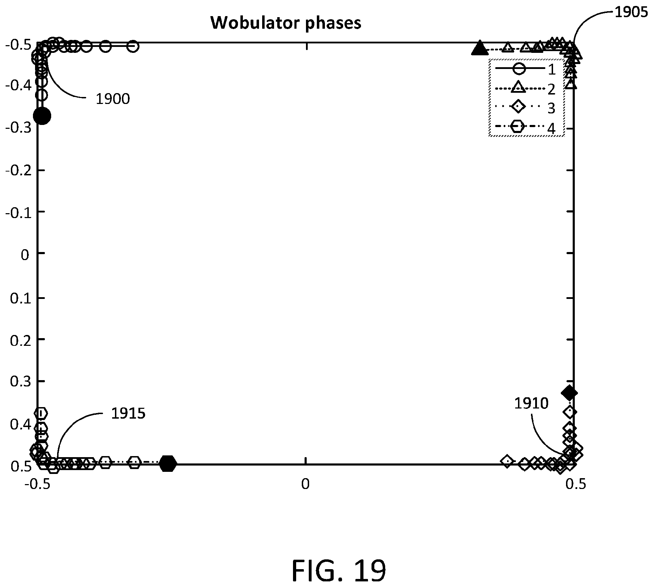

To mitigate artifacts created by motion of the wobulator between positions, one mitigation method proposed herein includes "blanking" (e.g. turning off) light projected by the DMD 100 during transition times of the modulator device. FIG. 19 provides a graph illustrating movement of a wobulation device between four positions and while implementing "blanking", according to one example. Specifically, the wobulation device shifts between a first position 1900, a second position 1905, a third position 1910, and a fourth position 1915. When transitioning between each position, the DMD 100 controls the plurality of micromirrors 102 to the "off" position for at least a portion of the transition time between positions, thereby directing the light away from the wobulation device and towards a light dump. Accordingly, the light that would previously be viewed during the transition between each position (such as that shown in FIG. 3) is removed.

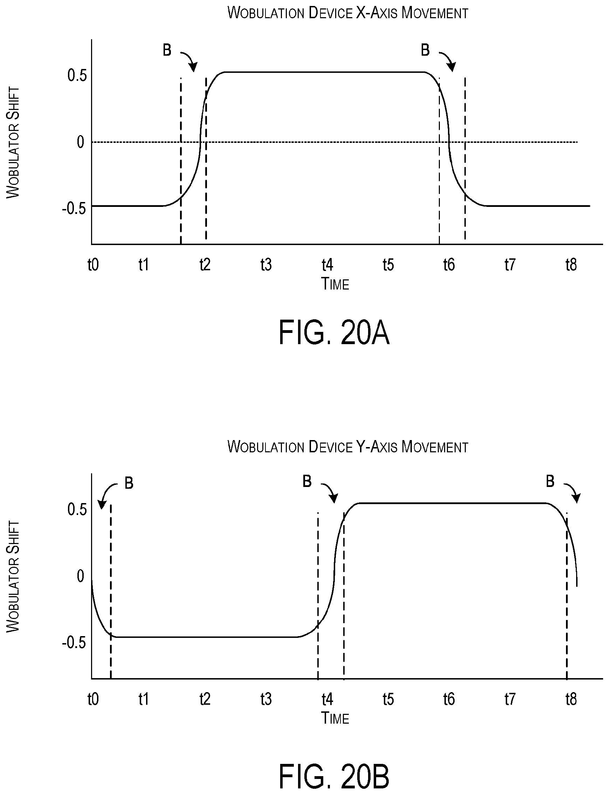

FIGS. 20A and 20B illustrate example movement of the wobulation device. FIG. 20A illustrates movement of the modulation device along the x-axis, and FIG. 20B illustrates movement of the modulation device along the y-axis. The period during which "blanking" of the light occurs is indicated by "B", and occurs during the transition periods between each position.

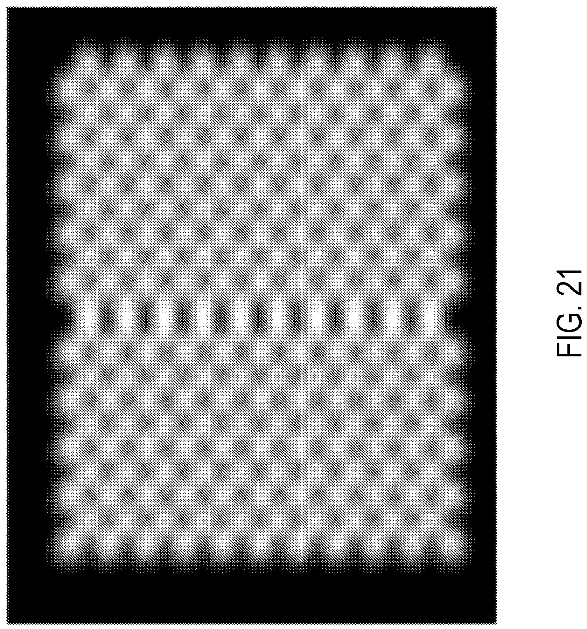

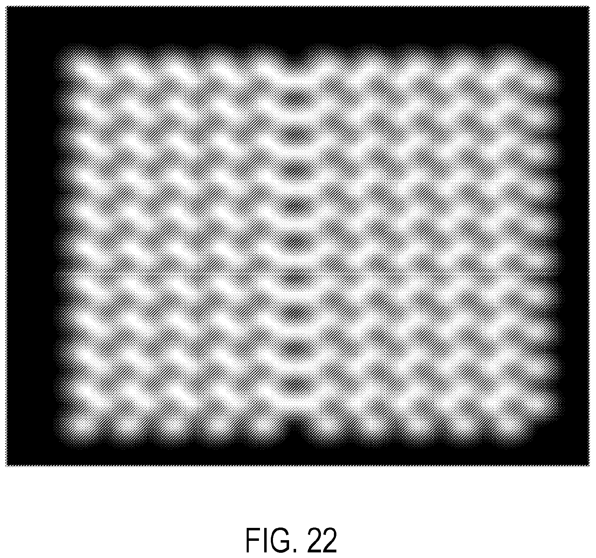

An example checkerboard pattern of wobulation devices implementing the "blanking" is provided in FIG. 21. For comparison, an example checkerboard pattern of wobulation devices not implementing the "blanking" is provided in FIG. 22. Less artifacts are present in the example of FIG. 21. While "blanking" provides for removal of artifacts, "blanking" also results in a loss of light to the light dump.

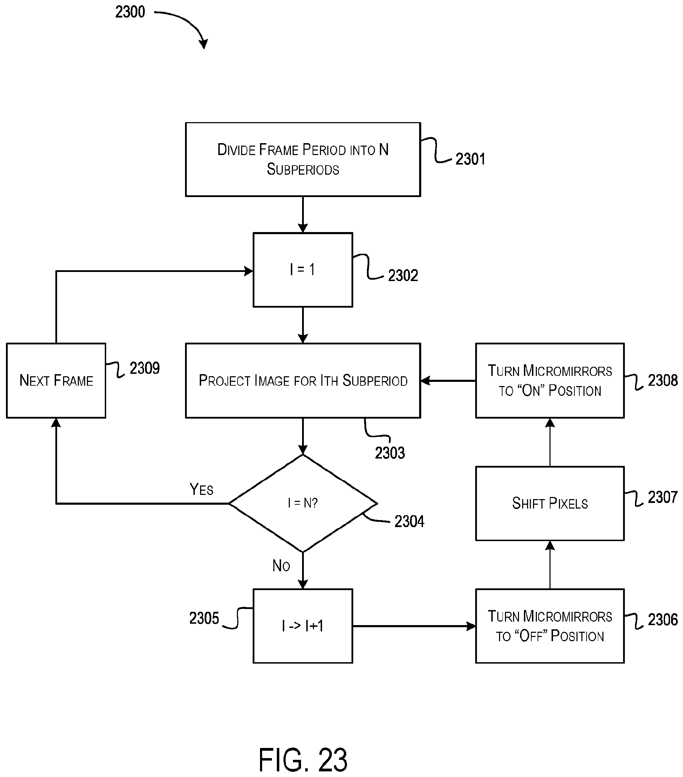

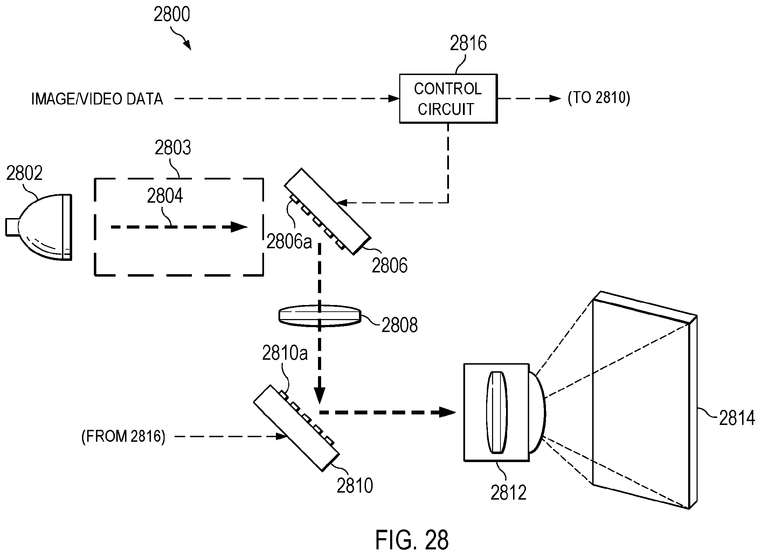

FIG. 23 provides a particular example method 2300 for implementing the "blanking" mitigation technique. The method 2300 of FIG. 23 may be performed by a controller or control circuit associated with control of the DMD 100 and wobulation device, such as the controller 2816 described with respect to FIG. 28, and may be implemented using hardware, software, firmware, or combinations thereof. In some examples, the method 2300 is implemented as instructions stored in a non-transitory computer-readable medium, such as a hard disk or other storage medium contained in or associated with a projection system.

In the method 2300, a series of images are displayed using image data which includes a series of frames. The image data is divided into a plurality of frame periods each corresponding to the duration T of a frame; for example, a 60 Hz display has a frame period T of (1/60) sec. At operation 2301, the frame period is divided into N subperiods, with N being an integer larger than 1. Preferably, N is four to implement a pixel-shifting pattern similar to that illustrated in FIG. 2 and a wobulation device movement pattern similar to that illustrated in FIG. 3; however, in other implementations N may be six or another number other than four. At operation 2302, a counter I is initialized to 1. Subsequently, at operation 2303, an image is projected by the DMD 100 and through the wobulation device for the I^{th} subperiod. Operation 2303 may include sub-operations, such as causing a light source of the projection system to emit light, controlling the spatial light modulator (e.g., the DMD 100 of FIG. 1) to modulate the light and form the image, and so on. This image is maintained for a duration of T / N. In the example of a 60 Hz display using four subperiods per frame, this subperiod duration is (1/240) sec.

At the end of the subperiod at operation 2304, the counter I is compared to N to determine if the subperiod is the last subperiod of the frame. If the counter I does not equal N, at operation 2305 the counter I is incremented by 1. At operation 2306, the micromirrors 102 of the DMD 100 are turned to the "off" position to provide "blanking" of the wobulation device. At operation 2307 the wobulation device is shifted such that the pixels are shifted. In the example where four subperiods are provided per frame, such as that shown in FIG. 19, and the pixel-shifting follows a square pattern as in FIG. 2, this corresponds to a half-pixel shift. Alternatively, four subperiods may be provided per frame and the pixel-shifting may follow a diamond or rectangle pattern; six subperiods may be provided per frame and the pixel-shifting may follow a rectangle or hexagon pattern; three subperiods may be provided per frame and the pixel-shifting may follow a triangle pattern; two subperiods may be provided per frame and the pixel-shifting may follow a linear (back-and-forth) pattern; and so on. In some implementations, the number of subperiods may be on the order of tens (or greater) and the pixel-shifting may approximate a circular pattern or a complex shape. Once the wobulation device approaches the new position, at operation 2308 the micromirrors 102 of the DMD 100 are turned to the "on" position. The duration of the blanking of the wobulation device (e.g., the duration of operations 2306 through 2308) may be, for example, 5% of the duration of the subperiod, 10% of the duration of the subperiod, 25% of the duration of the subperiod, or the like.

Thereafter, operation 2303 is repeated for the next subperiod until the time when the counter I is equal to N. At this point, at operation 2309 the frame is incremented and the method 2300 returns to operation 2302. Operations 2302 through 2309 are repeated for the duration of image display, and may continue until the endpoint of the media content has been reached, an operation issues a pause or stop instruction, and so on.

Another artifact mitigation method disclosed herein provides an expanded wobulation path for movement of the wobulation device. Traditionally, each position of the wobulator corresponds with a quadrant or corner of a micromirror 102, as the wobulation device represents each micromirror 102 as four "pixels" (e.g., effective pixels). Accordingly, each "effective" pixel is evenly spaced along the micromirror 102, and shifting of the wobulation device is a half-pixel (0.5) distance.

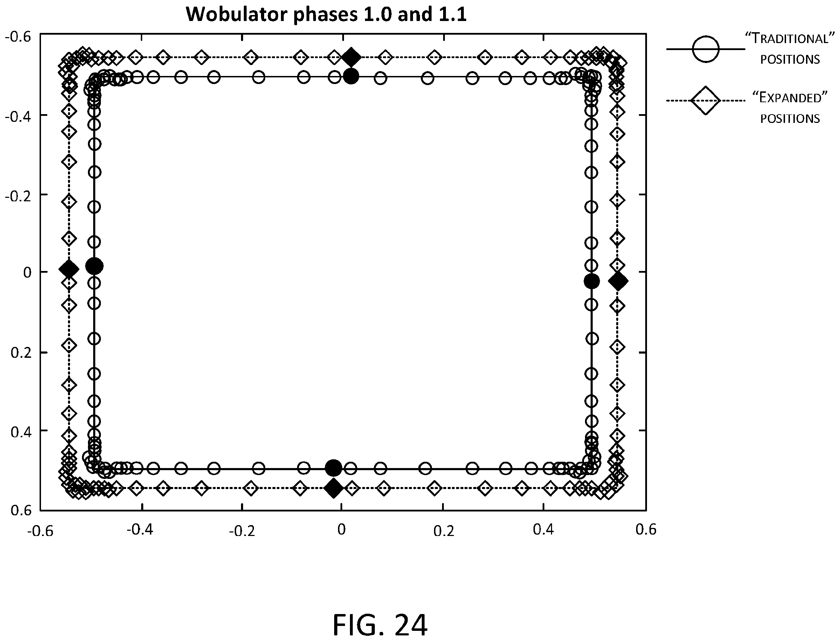

However, by shifting the wobulation device beyond a half-pixel distance, the wobulation device compensates for the pixel location shifts resulting from non-instantaneous transition times (see, e.g., the discussions associated with FIGS. 7 and 8 of how some wobulation artifacts shift the effective centers of the subpixels towards or away from the center of the four subpixels) and thus removes some artifacts without loss of light. FIG. 24 illustrates an example expanded wobulation path compared to a "traditional" wobulation path. In the example of FIG. 24, the expanded wobulation path is 0.55 pixel distance (or 1.1 times the distance of the "traditional" wobulation path). However, the expanded wobulation path may be any value greater than half-pixel distance (e.g., greater than 50% a pixel distance) that removes artifacts from the wobulation output image. In some embodiments, the expanded wobulation path is between 50.1% of a pixel distance and 60% of a pixel distance. In other embodiments, the expanded wobulation path is greater than 60% of a pixel distance, such as a value ranging from 60% to 70%, a value ranging from 70% to 80%, a value ranging from 80% to 90%, and a value ranging from 90% to 100%.

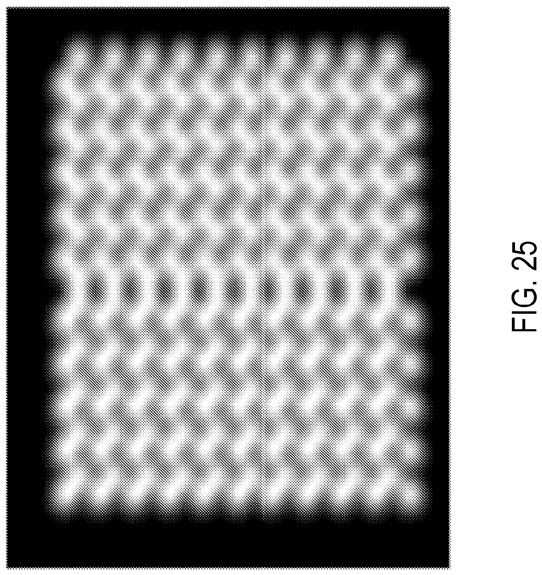

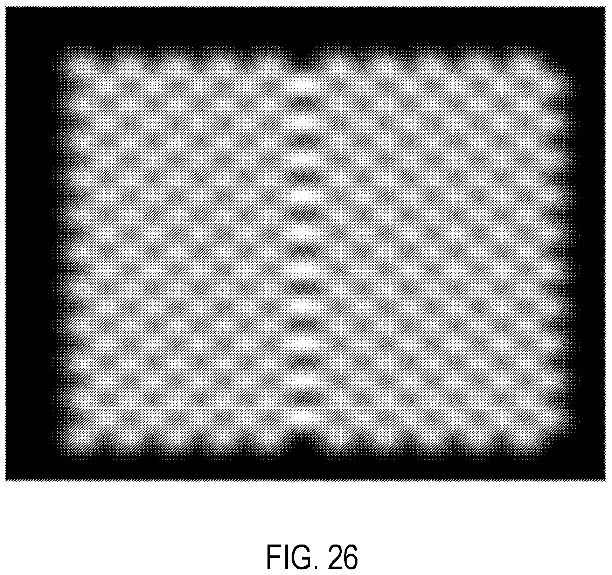

An example checkerboard pattern of wobulation devices implementing a "traditional" wobulation path is provided in FIG. 25. For comparison, an example checkerboard pattern of wobulation devices implementing the expanded wobulation path is provided in FIG. 26. Less artifacts are present in the example of FIG. 26.

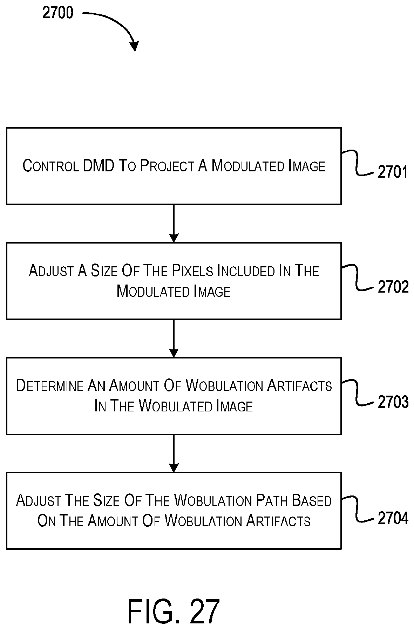

FIG. 27 provides a particular example method 2700 for calibrating a wobulation path of the wobulation device. The method 2700 may be performed during an initial setup of a projection system implementing the DMD 100 and respective wobulation device.

At operation 2701, the DMD 100 is controlled to project a modulated image. For example, the DMD 100 may be controlled to project a test image, such as the checkerboard image of FIG. 9 or the horizontal line image of FIG. 11. The modulated image may be projected onto a screen such that an operator performing the calibration is able to view the modulated image. In some instances, the DMD 100 initially projects an image having a "normal" pixel size PSF. At operation 2702, the size of the pixels included in the modulated image is adjusted. In some implementations, an aperture is added to the projection system to shrink the pixel size during calibration, making the artifacts more easily viewable during calibration.

At operation 2703, an amount of wobulation artifacts in the wobulated image are determined. At operation 2704, the size of the wobulation path is adjusted based on the amount of wobulation artifacts. For example, the size of the wobulation path is adjusted until artifacts within the modulated image are reduced to a desired level. For example, a dial, touchscreen, or other type of user interface is turned or otherwise interacted with to adjust the size of the wobulation path (for example, increasing the size of the wobulation path to be greater than a half-pixel distance). An operator adjusts the size of the wobulation path until the artifacts within the modulated image are reduced as desired.

In some instances, the artifacts are dependent on the framerate of the display. Accordingly, the method 2700 may be performed for a framerate corresponding to a framerate of the respective display, and the framerate is held constant for a duration of the calibration method 2700. In some instances, a greater expansion of the wobulation path may be needed to adequately mitigate wobulation artifacts when operating at a higher framerate (e.g., 120 Hz) than a lower frame rate (e.g., a 0.60 pixel size wobulation path may be useful at 120 Hertz for mitigating artifacts, while a 0.50 pixel size wobulation path may be sufficient at 60 Hz to avoid wobulation artifacts).

Additionally, while the method 2700 is described with respect to an operator calibrating the wobulation path, in some instances, a controller or control circuit associated with control of the DMD 100 and wobulation device, such as the controller 2816 described with respect to FIG. 28, and may implement the method 2700 using hardware, software, firmware, or combinations thereof. In some examples, the method 2700 is implemented as instructions stored in a non-transitory computer-readable medium, such as a hard disk or other storage medium contained in or associated with a projection system. For example, the controller 2816 may store a model indicating a desired output modulation image or an ideal wobulation path for a given framerate. The controller 2816 then selects a wobulation path based on the model.

While the "blanking" mitigation described in method 2300 and the expanded wobulation path mitigation described in method 2700 have been described separately, in some instances, the mitigation methods are complimentary and implemented simultaneously. The amount of each technique may be tuned to balance the artifact mitigation benefits with light loss based on the wobulation device being used.

While examples described herein have primarily related to doubling the resolution, in some instances, wobulation techniques may be used to increase the resolution of a DMD 100 by more than double, such as triple or quadruple the resolution of the DMD 100. In an embodiment where the resolution is tripled, the image is shifted by approximately a third (1/3) pixel distance rather than a half-pixel distance. Accordingly, in the expanded wobulation path mitigation method, the wobulation path is adjusted to be greater than a third-pixel distance. **In** an embodiment where the resolution is quadrupled, the image is shifted by approximately a fourth (1/4) pixel distance. Accordingly, in the expanded wobulation path mitigation method, the wobulation path is adjusted to be greater than a fourth-pixel distance.

### Projector Systems

FIG. 28 illustrates one possible embodiment of a suitable image projector display system implementing the described mitigation techniques. In the illustrated embodiment, the projector display system is constructed as a dual/multi-modulator projection system 2800. The projection system 2800 employs a light source 2802 that supplies the projector system with a desired illumination such that a final projected image will be sufficiently bright for the intended viewers of the projected image. Light source 2802 may comprise any suitable light source, such as, but not limited to, Xenon lamps, laser(s), coherent light sources, and partially-coherent light sources. Additionally, optical systems described herein may implement optical fibers to transfer light from the light source 2802 to optics within the optical system. While a light source and an optic fiber may be referred to separately, it is to be understood that the optic fiber is a component of the light source. Thus, reference to only the light source does not exclude the optic fiber.

**In** some implementations, the optic fiber is a rectangular optic fiber or a rectangular array of optic fibers having an aspect ratio that matches a downstream modulator, such as first modulator 2806 and/or second modulator 2810.

Light 2804 from the light source 2802 may illuminate a first modulator 2806 that may, in turn, illuminate a second modulator 2810 via a set of optional optical components 2808. Light from the second modulator 2810 may be projected by a projection lens 2812 (or other suitable optical components) to form a final projected image upon a screen 2814. In some instances, the wobulation device is implemented in the projection lens 2812. In other instances, the wobulation device may be optically situated between the second modulator 2810 and the projection lens 2812.

The first modulator 2806 and the second modulator 2810 may be controlled by a controller 2816. The controller 2816 may receive input image and/or video data and may perform certain image processing algorithms, gamut mapping algorithms, or other such suitable processing upon the input image/video data and output control/data signals to the first modulator 2806 and the second modulator 2810 in order to achieve a desired final projected image on the screen 2814. In addition, in some projector systems, it may be possible, depending on the light source, to modulate light source 2802 (control line not shown) in order to achieve additional control of the image quality of the final projected image.

Light recycling module 2803 is depicted in FIG. 28 as a dotted box that may be placed in the light path from the light source 2802 to the first modulator 2806. It may be appreciated that light recycling may be inserted into the projector system at various points in the projector system. For example, light recycling may be placed between the first modulator 2806 and the second modulator 2810. In addition, light recycling may be placed at more than one point in the optical path of the display system.

While the embodiment of FIG. 28 is presented in the context of a dual, multi-modulation projection system, it should be appreciated that the techniques and methods of the present application will find application in single modulation, or other dual, multi-modulation display systems. For example, a dual modulation display system comprising a backlight, a first modulator (e.g., LCD or the like), and a second modulator (e.g., LCD or the like) may employ suitable optical components and image processing methods and techniques to affect the performance and efficiencies discussed herein in the context of the projection systems. It should also be appreciated that, even though FIG. 28 depicts a two-stage or dual modulator display system, the methods and techniques of the present application may also find application in a display system with only one modulator or a display system with three or more modulator (multi-modulator) display systems. The scope of the present application encompasses these various alternative embodiments.

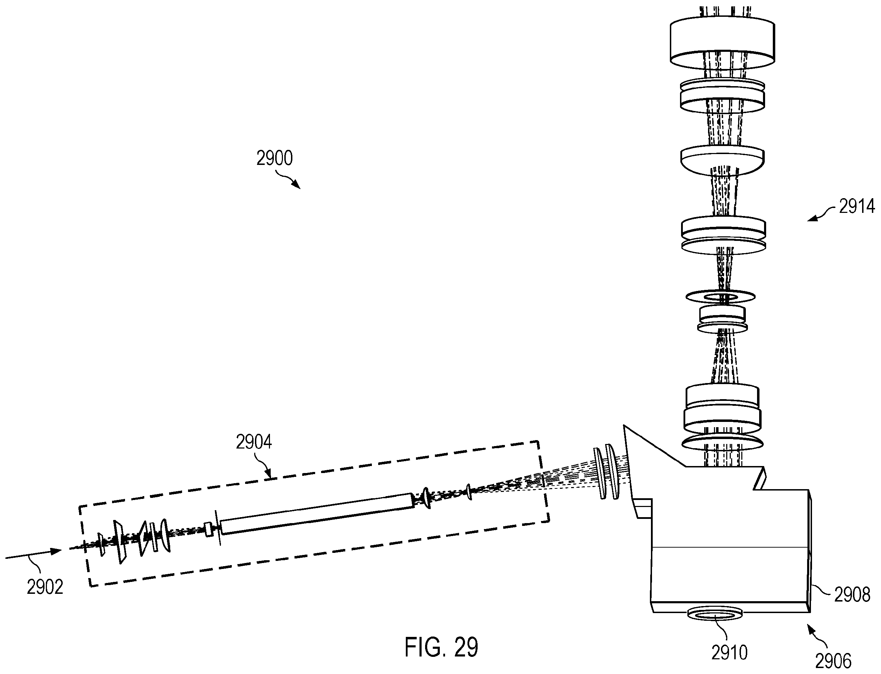

FIG. 29 illustrates another example projection system 2900. The projection system 2900 includes an illumination assembly 2904 (e.g., illumination optics) that receives light from a fiber input 2902 and feeds the light into a modulation assembly 2906. The modulation assembly 2906 includes a prism 2908 and a modulator 2910 (e.g., a reflector device). The modulator 2910 may be configured as a digital light processing (DLP) device, a DMD, or the like.

In some instances, the light from the fiber input 2902 is a white light input, and the prism 2908 is a white light prism. In such an instance, the prism 2908 includes several prism pieces. For example, a spectral filter, such as a yellow notch filter, may be provided in the prism 2908. Additional pieces may function as a TIR prism. In some embodiments, the modulation assembly 2906 includes three modulators 2910 (e.g., 3-chip) for modulating the received white light. the prism 2908 splits the white light into several color beams (e.g., three color channels), one color beam for each modulator 2910. A controller (such as the controller 2816) may be coupled to each modulator 2910 to control modulation of each color beam. The modulators 2910 then modulate their respective color beam before combining the modulated color beams in the prism 2908. In other embodiments, the modulator 2910 modulates the white light directly. In both embodiments, the modulation assembly 2906 then relays the output beam into projection optics 2914 of the projection system 2900. In some embodiments, the projection optics 2914 are included in a projection lens. In other embodiments, a portion or section of the projection optics 2914 are included in the projection lens. In some instances, the projection optics 2914 include the wobulation device.

**In** other instances, the projection system 2900 includes several fiber inputs 2902 from several color channels, such as a red color channel, a blue color channel, and a green color channel. In such an instance, the illustrated illumination assembly 2904 receiving the fiber input 2902 corresponds to only a single color channel provided to the prism 2908. Several illumination assemblies 2904 may be included to direct the light from the fiber inputs to the prism 2908. In this instance, the prism 2908 is a color light prism that receives each fiber input 2902 and redirects each color channel to a respective modulator 2910. Following modulation, the modulated color channels are combined and directed towards the projection optics 2914.

**In** some instances, the fiber inputs 2902 are high-etendue light sources. Etendue is a measurement of the emitting area multiplied by the solid angle, and is related to terms such as mm²*sr (steradians), M² factor, or beam parameter product (BPP). More specifically, etendue may be provided as: π*Area*NA². Accordingly, the light projected by a single fiber light input has a lower etendue than the light projected by a cluster of fiber light inputs (such as the plurality of inner fibers 710 of FIG. 7). High-etendue light sources may have an etendue of, for example, 0.2 mm²*sr to 50 mm²*sr. Single fibers disclosed herein having a diameter of approximately 450 microns may have an etendue of approximately 0.024 mm²*sr. Fibers having a diameter of approximately 100 microns may have an etendue of approximately 0.0012 mm²*sr.

**In** some instances, the illumination assembly 2904 achieve a high f-number having a narrow illumination angle while maintaining uniformity in the light illuminated onto the modulator 2910. The f-number (denoted f/#) is the ratio of the system's focal length to the diameter of the aperture. The f/# of the light illuminated onto the prism 2908 may be within a range of f/10 and f/20.

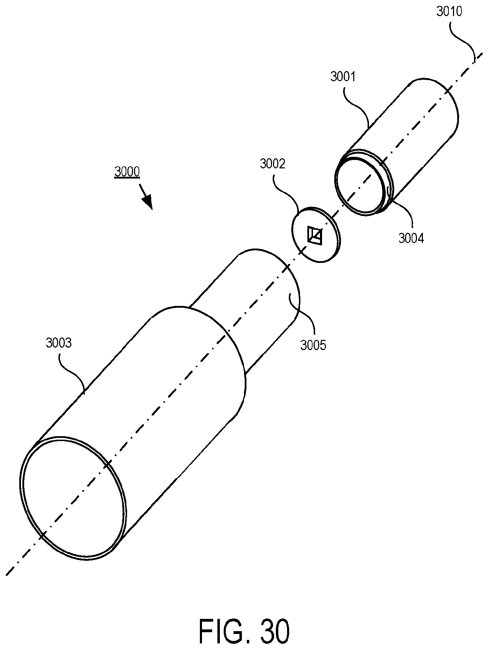

In some implementations, the projection optics 2914 is provided within a projection lens architecture. FIG. 30 is an exploded view of an exemplary projection lens system 3000 according to various aspects of the present disclosure. The projection lens system 3000 has a modular design. The projection lens system 3000 includes a Fourier part 3001 (for example, a Fourier lens assembly) configured to form a Fourier transform of an object at an exit pupil, an aperture 3002, and a zoom part 3003 (also referred to as a zoom lens assembly). The spatial Fourier transform imposed by the Fourier part 3001 converts the propagation angle of each diffraction order of the modulated light to a corresponding spatial position on the Fourier plane. The Fourier part 3001 thereby enables selection of desired diffraction orders, and rejection of undesired diffraction orders, by spatial filtering at the Fourier plane. The spatial Fourier transform of the modulated light at the Fourier plane is equivalent to a Fraunhofer diffraction pattern of the modulated light.

The Fourier part 3001 includes a first attachment section 3004, which may include threads, fasteners, and the like. the zoom part 3003 includes a second attachment section 3005, which may include complementary threads, fasteners, and the like to allow for mating with the first attachment sections 3004. In one example, the first attachment section 3004 includes a male threaded portion and the second attachment section 3005 includes a female threaded portion, or vice versa. In another example, the first attachment section 3004 and the second attachment section 3005 are configured for a friction fit, in which case one or more fastening elements such as screws, cams, flanges, and so on may be provided. In yet another example, the first attachment section 3004 may include one or more radial pins and the second attachment section 3005 may include a corresponding number of L-shaped slots, or vice versa, to thereby connect the Fourier part 3001 and the zoom part 3003 using a bayonet connection. By these examples, the Fourier part 3001 may be removably attached to the zoom part 3003 to provide a modular assembly.

While FIG. 30 illustrates the Fourier part 3001 and the zoon part 3003 as being entirely separable, the present disclosure is not so limited. In some implementations, the Fourier part 3001 and the zoom part 3003 are only partially separable, for example by provided an access portion in one of the Fourier part 3001 and the zoom part 3003. The access portion may be a slot, a door, a window, and the like, such that an operator may access and/or swap the aperture 3002 via the access portion. In such implementations, the Fourier part 301 and the zoom part 3003 may be bonded (e.g., via an adhesive on the first attachment section 3004 and/or the second attachment section 3005) to prevent full separation. Alternatively, the Fourier part 3001 and the zoom part 3003 may be provided with an integral housing that includes the attachment portion.

The aperture 3002 is configured to block a portion of light (e.g., modulated light corresponding to one or more diffraction orders) in the projection lens system 3000 (e.g., modulated light provided via the modulation assembly 2906). As illustrated in FIG. 30, the aperture 3002 is a square opening having sides of, for example, 6 mm in length. FIG. 30 also illustrates an optical axis 3010 of the projection lens system 3000. When assembled, the Fourier part 3001 and the zoom part 3003 are substantially coaxial with one another and with the optical axis 3010. In some implementations (for example, depending on the illumination angle), the aperture 3002 is further substantially coaxial with the optical axis 3010. However, in other implementations, the aperture 3002 may not be substantially coaxial with the optical axis 3010. In some instances, the aperture 300 is selected to achieve the desired "small point of light" at operation 2702 of the calibration method 2700.

The projection lens system 3000 may include or be associated with one or more non-optical elements, including a thermal dissipation device such as a heat sink (or cooling fins), one or more adhesives (or fasteners), and so on. In some implementations, the aperture 3002 may block, and thus absorb, approximately 15% of incident light and therefore the heat sink or cooling fins may be positioned and configured so as to appropriately dissipate heat from the aperture 3002. In some implementations, the aperture 3002 is thermally isolated from other parts of the projection lens system 3000.

The Fourier part 3001 and the aperture 3002 collectively operate as a Fourier lens with a spatial filter that may also be used as a fixed throw projection lens. The zoom part 3003 illustrated in FIG. 30 may be one of a family of zoom lens assemblies configured to attached to the Fourier part 3001, thereby to create the family of projection zoom lens systems and adapt to different theaters. In other words, the Fourier part 3001 and the aperture 3002 may be applicable to any theater setting, while the zoom part 3003 provides a specific projection light pattern tailored to a particular theater. Therefore, by selecting a particular zoom part 3003 from the family of zoom lens assemblies, and attaching the selected zoom part 3003 to the Fourier part 3001 and the aperture 3002, a projection lens system 3000 may be achieved which is adapted to the particular theater. Additionally, both the Fourier part 3001 and the zoom part 30 may include a plurality of individual lens elements.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

## Claims

1. A method (2700) of calibrating pixel shifting in a projection system comprising a light source, a spatial light modulator, and a wobulation device configured to shift the modulated light by fractional pixels, the method comprising:
emitting, with the light source, a light;
receiving, with the spatial light modulator, the light;
modulating, with the spatial light modulator, the light to generate a modulated image, wherein the modulated image comprises a plurality of pixels, the modulated image being a test image;
projecting (2701), with the projection system, the modulated image onto a screen;
shifting, between each of a plurality of subperiods, the modulated light of each pixel of the modulated image by a partial pixel distance to generate a wobulated image;
determining (2703), by analyzing the projected image, an amount of wobulation artifacts in the wobulated image;
providing a user interface configured to enable a user to adjust the partial pixel distance based on the determined amount of wobulation artifacts; and
adjusting (2704) the partial pixel distance via the user interface based on the determined amount of wobulation artifacts until artifacts within the modulated image are reduced to a desired level.

2. The method (2700) according to claim 1, wherein adjusting the partial pixel distance comprises adjusting the partial pixel distance to be greater than a half-pixel distance.

3. The method (2700) according to any one of claims 1 to 2, wherein a framerate of the projection system is held constant during the adjusting of the partial pixel distance.

4. The method (2700) according to any one of claims 1 to 3, wherein the adjustment of the partial pixel distance is dependent on a framerate of the projection system.

5. The method (2700) according to any one of claims 1 to 4, wherein adjusting the partial pixel distance comprises adjusting the partial pixel distance based on a model stored in a memory, the model indicating a desired output modulation image or an ideal wobulation path for a given framerate.

6. A projection system (2800) for calibrating pixel shifting, comprising:
a light source (2802) configured to emit a light;
a spatial light modulator configured to receive the light and modulate the light to generate a modulated image, wherein the modulated image comprises a plurality of pixels, the modulated image being a test image;
a screen (2814) configured to display a projection of the modulated image;
a wobulation device configured to shift, between each of a plurality of subperiods, the modulated light of each pixel of the modulated image by a partial pixel distance to generate a wobulated image; and
a user interface configured to enable a user to adjust the partial pixel distance based on a determined amount of wobulation artifacts in the wobulated image until artifacts within the modulated image are reduced to a desired level.

## Patentansprüche

1. Verfahren (2700) zum Kalibrieren einer Pixelverschiebung in einem Projektionssystem, umfassend eine Lichtquelle, einen räumlichen Lichtmodulator und eine Wobbelvorrichtung, die konfiguriert ist, um das modulierte Licht um fraktionierte Pixeln zu verschieben, wobei das Verfahren umfasst:
Aussenden von Licht mit der Lichtquelle;
Empfangen des Lichts mit dem räumlichen Lichtmodulator;
Modulieren des Lichts mit dem räumlichen Lichtmodulator, um ein moduliertes Bild zu erzeugen, wobei das modulierte Bild eine Vielzahl von Pixeln umfasst, wobei das modulierte Bild ein Testbild ist;
Projizieren (2701) des modulierten Bildes mit dem Projektionssystem auf eine Leinwand;
Verschieben, zwischen jedem einer Vielzahl von Teilzeiträumen, des modulierten Lichts eines jeden Pixels des modulierten Bildes um einen Teilpixelabstand, um ein gewobbeltes Bild zu erzeugen;
Bestimmen (2703), durch Analysieren, des projizierten Bildes einer Menge an Wobbelartefakten im gewobbelten Bild;
Bereitstellen einer Benutzeroberfläche, die konfiguriert ist, um es einem Benutzer zu ermöglichen, den Teilpixelabstand basierend auf der bestimmten Menge an Wobbelartefakten anzupassen; und
Anpassen (2704) des Teilpixelabstands über die Benutzeroberfläche basierend auf der bestimmten Menge an Wobbelartefakten, bis Artefakte im modulierten Bild auf eine gewünschte Stufe reduziert sind.

2. Verfahren (2700) nach Anspruch 1, wobei Anpassen des Teilpixelabstands Anpassen des Teilpixelabstands umfasst, um größer als ein Halbpixelabstand zu sein.

3. Verfahren (2700) nach einem der Ansprüche 1 oder 2, wobei die Bildwiederholrate des Projektionssystems während des Anpassens des Teilpixelabstands konstant gehalten wird.

4. Verfahren (2700) nach einem der Ansprüche 1 bis 3, wobei das Anpassen des Teilpixelabstands von der Bildwiederholungsrate des Projektionssystems abhängt.

5. Verfahren (2700) nach einem der Ansprüche 1 bis 4, wobei Anpassen des Teilpixelabstands Anpassen des Teilpixelabstands basierend auf einem in einem Speicher gespeicherten Modell umfasst, wobei das Modell ein gewünschtes Ausgabemodulationsbild oder einen idealen Wobbelpfad für eine gegebene Bildwiederholungsrate angibt.

6. Projektionssystem (2800) zum Kalibrieren von Pixelverschiebung, umfassend:
eine Lichtquelle (2802), die konfiguriert ist, um Licht auszusenden;
einen räumlichen Lichtmodulator, der konfiguriert ist, um das Licht zu empfangen und zu modulieren, um ein moduliertes Bild zu erzeugen, wobei das modulierte Bild eine Vielzahl von Pixeln umfasst, wobei das modulierte Bild ein Testbild ist;
einen Bildschirm (2814), der konfiguriert ist, um eine Projektion des modulierten Bildes anzuzeigen;
eine Wobbelvorrichtung, die konfiguriert ist, um zwischen jedem einer Vielzahl von Teilzeiträumen des modulierten Lichts jedes Pixels das modulierte Bild um einen Teilpixelabstand zu verschieben, um ein gewobbeltes Bild zu erzeugen;
eine Benutzeroberfläche, die konfiguriert ist, um es einem Benutzer zu ermöglichen, den Teilpixelabstand basierend auf einer bestimmten Menge an Wobbelartefakten im gewobbelten Bild anzupassen, bis Artefakte im modulierten Bild auf eine gewünschte Stufe reduziert sind.

## Revendications

1. Procédé (2700) d'étalonnage d'un décalage de pixels dans un système de projection comprenant une source de lumière, un modulateur spatial de lumière et un dispositif de wobulation configuré pour décaler la lumière modulée par des pixels fractionnaires, le procédé comprenant :
l'émission, avec la source de lumière, d'une lumière ;
la réception, avec le modulateur spatial de lumière, de la lumière ;
la modulation, avec le modulateur spatial de lumière, de la lumière pour générer une image modulée, dans lequel l'image modulée comprend une pluralité de pixels, l'image modulée étant une image de test ;
la projection (2701), avec le système de projection, de l'image modulée sur un écran ;
le décalage, entre chacune d'une pluralité de sous-périodes, de la lumière modulée de chaque pixel de l'image modulée d'une distance de pixel partiel pour générer une image wobulée ;
la détermination (2703), en analysant l'image projetée, d'une quantité d'artefacts de wobulation dans l'image wobulée ;
la fourniture d'une interface utilisateur configurée pour permettre à un utilisateur d'ajuster la distance de pixel partiel sur la base de la quantité déterminée d'artefacts de wobulation ; et
l'ajustement (2704) de la distance de pixel partiel via l'interface utilisateur sur la base de la quantité déterminée d'artefacts de wobulation jusqu'à ce que les artefacts dans l'image wobulée soient réduits à un niveau souhaité.

2. Procédé (2700) selon la revendication 1, dans lequel l'ajustement de la distance de pixel partiel comprend l'ajustement de la distance de pixel partiel pour qu'elle soit supérieure à une distance de demi-pixel.

3. Procédé (2700) selon l'une quelconque des revendications 1 et 2, dans lequel une fréquence d'images du système de projection est maintenue constante pendant l'ajustement de la distance de pixel partiel.

4. Procédé (2700) selon l'une quelconque des revendications 1 à 3, dans lequel l'ajustement de la distance de pixel partiel dépend d'une fréquence d'images du système de projection.

5. Procédé (2700) selon l'une quelconque des revendications 1 à 4, dans lequel l'ajustement de la distance de pixel partiel comprend l'ajustement de la distance de pixel partiel sur la base d'un modèle stocké dans une mémoire, le modèle indiquant une image de modulation de sortie souhaitée ou un chemin de wobulation idéal pour une fréquence d'images donnée.

6. Système de projection (2800) pour l'étalonnage d'un décalage de pixels, comprenant :
une source de lumière (2802) configurée pour émettre une lumière ;
un modulateur spatial de lumière configuré pour recevoir la lumière et moduler la lumière pour générer une image modulée, dans lequel l'image modulée comprend une pluralité de pixels, l'image modulée étant une image de test ;
un écran (2814) configuré pour afficher une projection de l'image modulée ;
un dispositif de wobulation configuré pour décaler, entre chacune d'une pluralité de sous-périodes, la lumière modulée de chaque pixel de l'image modulée d'une distance de pixel partiel pour générer une image wobulée ; et
une interface utilisateur configurée pour permettre à un utilisateur d'ajuster la distance de pixel partiel sur la base d'une quantité déterminée d'artefacts de wobulation dans l'image wobulée jusqu'à ce que les artefacts dans l'image modulée soient réduits à un niveau souhaité.
